# EUROPÄISCHE PATENTSCHRIFT

(11) **EP 1 342 895 B1**
(45) Veröffentlichungstag und Bekanntmachung des Hinweises auf die Patenterteilung: **29.03.2006**
(21) Anmeldenummer: 03100082.1
(22) Anmeldetag: 17.01.2003
(51) Int. Cl.: F02B 37/12, F02D 41/22, F04D 27/02

(54) **Verfahren zur Diagnose eines elektrisch angetriebenen Verdichters**
Method for diagnosing an electrically driven compressor
Procédé de diagnostic d'un compresseur actionné électriquement

(30) Priorität: 21.01.2002 DE 10202111
(43) Veröffentlichungstag der Anmeldung: 10.09.2003
(73) Patentinhaber: SIEMENS AKTIENGESELLSCHAFT, 80333 München (DE)
(72) Erfinder: Ellmer, Dietmar, 93057, Regensburg (DE); Teiner, Markus, 93057, Regensburg (DE)

(56) Entgegenhaltungen:
- DE-A- 4 214 648
- DE-A- 19 963 358
- FR-A- 2 827 336
- PATENT ABSTRACTS OF JAPAN Bd. 2000, Nr. 22, 9. März 2001 (2001-03-09) & JP 2001 123844 A (HONDA MOTOR CO LTD), 8. Mai 2001 (2001-05-08)
- PATENT ABSTRACTS OF JAPAN Bd. 014, Nr. 164 (M-0957), 30. März 1990 (1990-03-30) & JP 02 023232 A (ISUZU MOTORS LTD), 25. Januar 1990 (1990-01-25)

## Beschreibung

Die vorliegende Erfindung betrifft ein Verfahren zur Erkennung von Fehlern an einem elektrisch angetriebenen Verdichter in einer Brennkraftmaschine.

Die elektrisch angetriebenen Verdichter, sogenannte elektrische Booster, für Brennkraftmaschinen unterliegen mechanischem Verschleiß, der unter anderem zu erhöhter Reibung in den Lagern führt. Durch den Betrieb unter ungünstigen Bedingungen kann dieser Verschleiß sich verstärken, so führen beispielsweise Übertemperatur, Überdrehzahl und mangelnde Schmierung zu einer Verschlechterung der Bedingungen.

Auch das sogenannte Pumpen an dem Verdichter, bei dem es zu einem oszillierenden Druckverlauf durch den Verdichter kommt, führt im besonderen Maße zum Verschleiß. Das Pumpen an dem Verdichter entsteht durch einen Strömungsabriss an den Verdichterschaufeln aufgrund eines zu hohen Druckgefälles und eines zu geringen Massendurchsatzes. Nach dem Abriss strömt Luft durch den Verdichter zurück, die Druckdifferenz baut sich ab, bis sich wieder eine Strömung an den Verdichterschaufeln und ein entsprechender Druck aufgebaut hat. Weiterhin können mechanische Beschädigungen ein verändertes Förderverhalten des elektrisch angetriebenen Verdichters bedingen. Beschädigungen entstehen beispielsweise durch Gegenstände, die durch den Ansaugluftweg in den elektrisch angetriebenen Verdichter gelangen und dort auf eine der Schaufeln treffen.

In JP2001123844 wird ein Fehler neinem elektrisch angetriebenen Verdichter erkannt, wenn die Drehzahldes elektrisch angetriebenen Motors, die abhängig von dem Strom eud der Spannung des Motors gerechnet wird, einen Sollwert überstreigt.

Der Erfindung liegt die Aufgabe zugrunde, einen elektrisch angetriebenen Verdichter zu überwachen, um Verschleiß, man-gelnde Schmierung oder sonstige Beschädigungen besser festzustellen.

Die der Erfindung zugrundeliegende Aufgabe wird durch ein Verfahren mit den Merkmalen aus Anspruch 1 gelöst.

Bei dem erfindungsgemäßen Verfahren bestimmt ein Verdichtermodell abhängig von Betriebsparametern des Verdichters einen Wert für die Leistung des elektrisch angetriebenen Verdichters. Ein Motormodell für den elektrisch angetriebenen Verdichter bestimmt abhängig von Parametern der elektrischen Versorgung, die aufgenommene elektrische Leistung des elektrisch angetriebenen Verdichters. Eine Fehlererkennungseinheit erzeugt ein Fehlersignal für eine Motorsteuerung, wenn in einem stationären Betriebszustand des elektrisch angetriebenen Verdichters die Differenz zwischen aufgenommener elektrischer Leistung und erzeugter Leistung einen ersten Grenzwert übersteigt. Bei dem erfindungsgemäßen Verfahren wird die Diagnose des elektrisch angetriebenen Verdichters abhängig von einer Leistungsbilanz vorgenommen. Die Leistungen werden unabhängig voneinander bestimmt und sollten bei einem intakten elektrisch angetriebenen Verdichter im stationären Zustand ungefähr übereinstimmen. Weichen diese beiden Werte voneinander ab, so wird das Laufzeug des elektrisch angetriebenen Verdichters entweder übermäßig abgebremst oder beschleunigt. Im Fehlerfall liegt die aufgenommene Leistung des Elektromotors deutlich über der Verdichterleistung, da Leistung zur Überwindung von Reibung oder sonstigen Beschädigungen aufgebracht werden muss.

Die erfindungsgemäße Aufgabe wird ebenfalls durch ein Verfahren mit den Merkmalen aus Anspruch 2 gelöst.

Das erfindungsgemäße Verfahren bezieht sich auf eine Diagnose des elektrisch angetriebenen Verdichters in transienten Zuständen. Ein transienter Betriebszustand ist ein Zustand, bei dem die Betriebsparameter nicht stationär sind, jedoch die Änderungen quasi-stationär und nicht sprunghaft verlaufen. Bei diesem Verfahren wird zur Erkennung des Fehlers die Differenz zwischen einer Drehbeschleunigung an dem elektrisch angetriebenen Verdichter und einer modellierten Drehbeschleunigung dahingehend verglichen, ob ein zweiter Grenzwert überschritten wird. Die modellierte Drehbeschleunigung wird aufgrund der Differenz von Verdichterleistung und aufgenommener elektrischer Leistung bestimmt. Hierbei liegt zugrunde, dass die Differenz zwischen aufgenommener und abgegebener Leistung in eine Drehbeschleunigung des Verdichters umgesetzt wird. Diese modellierte Drehbeschleunigung wird mit der tatsächlichen Drehbeschleunigung verglichen, so dass eine Abweichung, die einen zweiten Grenzwert überschreitet, Rückschlüsse auf Fehler an dem elektrisch angetriebenen Verdichter zulässt.

Da bevorzugt eine Diagnose des elektrisch angetriebenen Verdichters in regelmäßigen Zeitabständen erfolgt, kann für die reguläre Diagnose der stationäre Zustand abgewartet werden.

Die der Erfindung zugrundeliegende Aufgabe wird ebenfalls gelöst durch ein Verfahren mit den Merkmalen aus Anspruch 3.

Bei diesem Verfahren erfolgt die Fehlererkennung aus der Differenz für den Wert der Drehzahl des elektrisch angetriebenen Verdichters. Einerseits wird die Drehzahl des Verdichters abhängig von Betriebsparametern in dem Verdichtermodell bestimmt, während ein weiterer Wert für die Drehzahl über das Motormodell abhängig von der elektrischen Versorgung des Verdichters bestimmt wird. Ein Fehler wird erkannt, wenn die Differenz der Drehzahlen einen dritten Grenzwert überschreitet. Bei dem Verfahren gemäß Anspruch 2 wird die Diagnose des elektrisch angetriebenen Verdichters über einen Vergleich der Drehzahlen ausgeführt, wobei die Drehzahl einerseits aufgrund der Betriebsparameter und andererseits aufgrund der elektrischen Versorgung bestimmt wird. Arbeitet der elektrisch angetriebene Verdichter einwandfrei, so führt dies dazu, dass die auf unterschiedliche Weise ermittelten Drehzahlen weitgehend übereinstimmen.

Bevorzugt wird der erste Grenzwert für den stationären Zustand und der zweite Grenzwert für den instationären Zustand abhängig von Öleigenschaften, vorzugsweise der Öltemperatur, und der Drehzahl des elektrisch angetriebenen Verdichters bestimmt. Der dritte Grenzwert für den Drehzahlvergleich ist dabei bevorzugt abhängig von der Temperatur der Ansaugluft.

In einer bevorzugten Ausgestaltung des erfindungsgemäßen Verfahrens besitzt das Verdichtermodell als Ausgangsgröße die Leistung des elektrisch angetriebenen Verdichters, die Drehzahl des elektrisch angetriebenen Verdichters, den Ladedruck vor dem elektrisch angetriebenen Verdichter und den Massenstrom durch den elektrisch angetriebenen Verdichter. Das Verdichtermodell modelliert also die Wirkung eines elektrisch angetriebenen Verdichters auf den Luftmassenstrom. Das Verdichtermodell führt dies vorzugsweise mit den folgenden Eingangsgrößen aus: der Umgebungsdruck, die Ansauglufttemperatur, der Druckverlust an dem Ladeluftkühler, der Druckverlust am Luftfilter, der Luftmassenstrom durch den Luftfilter und der Ladedruck an dem elektrisch angetriebenen Verdichter. Die Eingangsgrößen erfassen die wesentlichen Eigenschaften der angesaugten Luft, um mit Hilfe von Kenndaten zu dem elektrisch angetriebenen Verdichter, deren Wirkung modellieren zu können. In einer bevorzugten Weiterführung des erfindungsgemäßen Verfahrens bestimmt das Motormodell für den elektrisch angetriebenen Verdichter die Drehzahl des Verdichters und die aufgenommene elektrische Leistung. Vorzugsweise bestimmt das Motormodell die Ausgangsgrößen abhängig von der Bordnetzspannung und dem Tastverhältnis der Verdichteransteuerung als Eingangsgröße. Mit den entsprechenden Kenngrößen des Elektromotors kann so die Drehzahl des elektrisch angetriebenen Verdichters bestimmt werden. Vorzugsweise ist eine Zustandserkennung vorgesehen, die den stationären und transienten Zustand des elektrisch angetriebenen Verdichters erkennt und für jeden der Zustände ein Freigabesignal erzeugt. Die Zustandserkennung erfolgt vorzugsweise abhängig von dem Ladedruck vor dem elektrisch angetriebenen Verdichter, dem Luftmassenstrom durch den elektrisch angetriebenen Verdichter und dem Ladedruck des elektrisch angetriebenen Verdichters.

Ein bevorzugtes Ausführungsbeispiel wird nachfolgend anhand der Figuren näher beschrieben. Es zeigt:
- Fig. 1: eine schematische Übersicht einer Registeraufladung mit einem elektrisch angetriebenen Verdichter,
- Fig. 2: eine schematische Ansicht der Fehlererkennung des elektrisch angetriebenen Verdichters,
- Fig. 3: eine schematische Ansicht der Fehlererkennung aufgrund der Drehzahl,
- Fig. 4: eine schematische Ansicht der Fehlererkennung im stationären Zustand und
- Fig. 5: eine schematische Ansicht der Fehlererkennung im transienten Zustand.

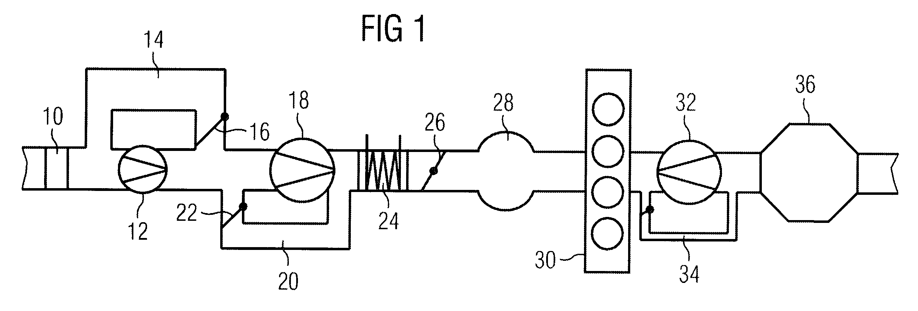

Fig. 1 zeigt in einer schematischen Übersicht die Registeraufladung mit einem E-Booster als elektrisch angetriebenem Verdichter. Zu Beginn des Strömungsweges steht ein Luftfilter 10, an den sich stromabwärts der elektrisch angetriebene Verdichter 12 anschließt. Parallel zu dem Verdichter 12 ist ein Bypass-Kanal 14 vorgesehen, in dem eine ansteuerbare Klappe 16 zur Steuerung des Luftstroms durch den Bypass 14 vorgesehen ist. Weiter stromabwärts ist in Fig. 1 der Verdichter eines Abgasturboladers 18 dargestellt. Parallel zum Verdichter 18 ist ein Umluftkanal 20 mit einer ansteuerbaren Klappe 22 vorgesehen.

Stromabwärts vom Verdichter 18 ist ein Ladeluftkühler 24 in dem Strömungskanal angeordnet. An diesen schließt sich die Drosselklappe 26 und die Ansaugleitung 28 sowie die Zylinder 30 der Brennkraftmaschine an. Lediglich der Vollständigkeit halber dargestellt ist stromabwärts von den Zylindern 30 die Turbine 32 des Abgasturboladers mit ihrem Wastegate 34. Hieran schließt sich der Katalysator 36 an.

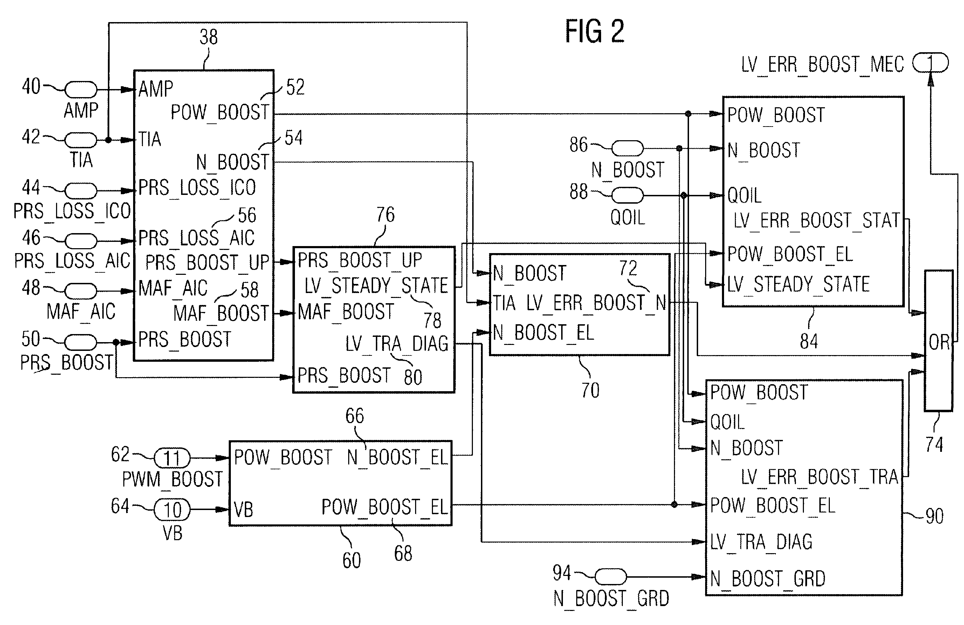

Fig. 2 zeigt eine Übersicht über das erfindungsgemäße Verfahren. An einem Verdichtermodell 38 liegen Umgebungsdruck 40 (AMP), Ansauglufttemperatur 42 (TIA), Druckverlust des Ladeluftkühlers 44 (PRS_LOSS_ICD), Druckverlust des Luftfilters 46 (PRS_LOSS_AIC), der Luftmassenstrom durch den Luftfilter 48 (MAF_AIC) und Ladedruck des Boosters 50 (PRS_BOOST) an. Das Verdichtermodell 38 bestimmt aus den Eingangsgrößen die erbrachte Leistung des Boosters 52 (POW_BOOST), die Boosterdrehzahl 54 (N_BOOST), den Ladedruck 56 vor dem Booster (PRS_BOOST_UP) und den Luftmassenstrom 58 durch den Booster (MAF_BOOST) .

Ein Motormodell 60 bestimmt abhängig von dem Tastverhältnis der Boosteransteuerung 62 (PWM_BOOST) und der Bordnetzspannung 64 (VB) die Werte für die Boosterdrehzahl 66 (N_BOOST_EL) und die Boosterleistung 68 (POW_BOOST_EL).

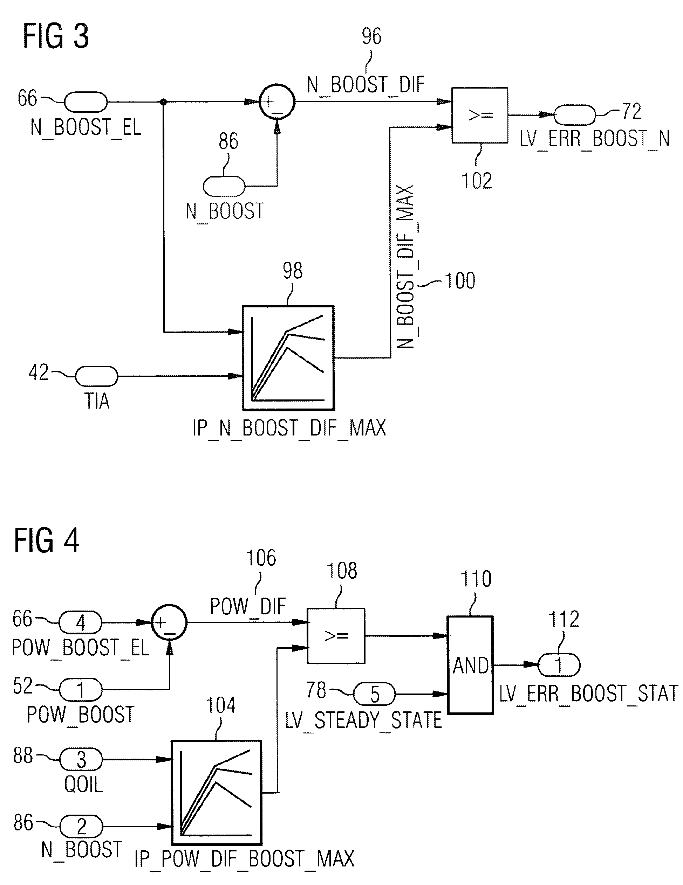

In der Drehzahldiagnose 70 liegen als Eingangsgröße die Boosterdrehzahl 66 aufgrund des Motormodells 60 und die Boosterdrehzahl 54 aufgrund des Verdichtermodells 38 an. Um den Schwellwert für die maximal zulässige Abweichung zu setzen, liegt an dem Diagnosemodell 70 zusätzlich die Ansauglufttemperatur 42 (TIA) an. Die genaue Funktionsweise des Modells wird nachfolgend mit Bezug auf Fig. 3 näher beschrieben. Das von der Drehzahldiagnose 70 erzeugte Fehlersignal 72 (LV_ERR_BOOST_N) wird über eine Oderverknüpfung 74 als Ausgangsgröße des Verfahrens weitergeleitet.

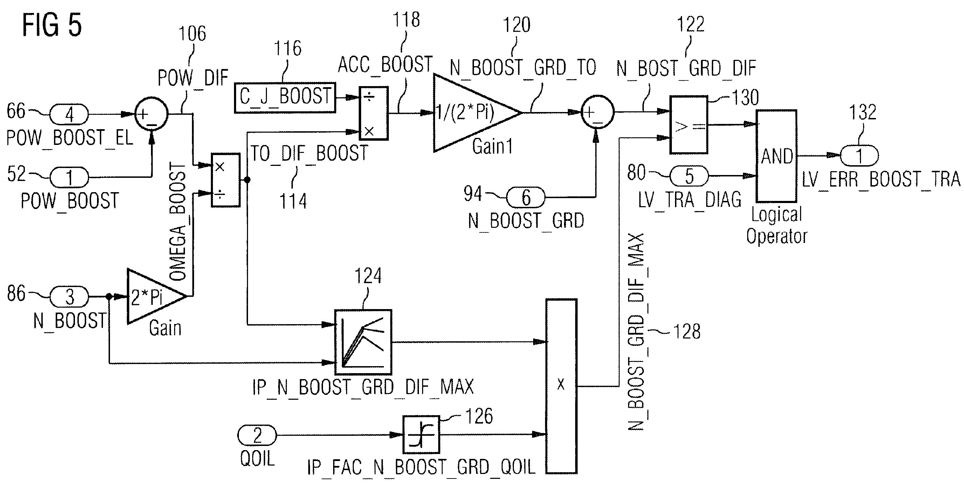

Eine Zustandserkennung 76 bestimmt, ob ein stationärer oder ein transienter Zustand vorliegt. Die Zustandsbestimmung in dem Modell 76 erfolgt mit Bezug auf den Betriebszustand des elektrisch angetriebenen Verdichters. Die Zustandserkennung 76 besitzt als Eingangsgrößen den Ladedruck 56 vor dem Booster und den Luftmassenstrom 58 durch den Booster. Beide Größen werden aus dem oben beschriebenen Verdichtermodell 38 bestimmt. Zusätzlich liegt an der Zustandserkennung 76 der Ladedruck des Boosters 50 an. In dem Modell 76 erfolgt die Erkennung für den stationären Zustand unabhängig von der Erkennung des transienten Zustand. Die Fehlererkennungen werden nachfolgend mit Bezug auf die Figuren 4 und 5 näher erläutert. Die Diagnoseerkennung 76 erzeugt ein Freigabeflag für die stationäre Diagnose 78 (LV_STEADY_STATE) und ein Freigabeflag für die Diagnose im transienten Zustand 80 (LV_TRA_DIAG).

Im stationären Zustand erfolgt die Fehlererkennung über eine Leistungsdiagnose. Als Eingangsgrößen für die Leistungsdiagnose, dienen die Boosterleistung 52 aus dem Verdichtermodell 38 und die Boosterleistung 68 aus dem Motormodell 60. Zusätzlich liegt an der Fehlererkennung das Flag für die stationäre Diagnose 78 an. Um den zulässigen Schwellwert für den Vergleich der Leistungen bestimmen zu können, liegen die Boosterdrehzahl 86 und Öleigenschaften, vorzugsweise die Öltemperatur 88, an.

Für den transienten Zustand 90 liegen für den Leistungsvergleich zusätzlich der Gradient der Boosterdrehzahl 94 (N_BOOST_GRD) an. Statt des Freigabeflags für den stationären Zustands liegen an der Fehlererkennung für den transienten Zustand das entsprechende Freigabeflag 80 aus der Zustandsdiagnose 76 an.

Die in den drei Modellen 70, 80 und 90 generierten Fehlersignale basierend auf der Drehzahl (LV_ERR_BOOST_N), der Leistung im stationären Zustand (LV_ERR_BOOST_STAT) und der Leistung im instationären Zustand (LV_ER_BOOST_TRA) werden nach einer Oderverknüpfung 74 weitergeleitet. Statt der einfachen Oderverknüpfung können auch andere Verknüpfungen der drei Fehlersignale vorgesehen werden, beispielsweise eine paarweise Undverknüpfung und eine Oderverknüpfung eines Fehlerwertes mit dem Ergebnis der Undverknüpfung. Auch ist es möglich, die drei Fehlersignale unterschiedlich zu gewichten.

Fig. 3 zeigt die Berechnung des Fehlersignals aufgrund der Drehzahl des elektrisch angetriebenen Verdichters näher. In einem Subtraktionsschritt 96 wird aus der Boosterdrehzahl 66 des Motormodells und der Boosterdrehzahl 86 aus dem Verdichtermodell eine Abweichung 96 (N_BOOST_DIF) gebildet. Zu Bestimmung der maximalen Abweichung zwischen den Drehzahlen wird abhängig von der Sauglufttemperatur 42 und der Boosterdrehzahl 66 aus dem Motormodell 60 über ein Kennfeld 98 eine maximale Abweichung 100 (N_BOOST_DIF_MAX) berechnet. Die Abweichung 96 wird mit der maximal zulässigen Abweichung 100 in einem Vergleichsschritt 102 verglichen. Ist die Regelabweichung 96 größer als die maximale zulässige Abweichung so wird ein Fehlersignal (LV_ERR_BOOST) 72 erzeugt.

Fig. 4 zeigt die Berechnung des Fehlersignal im stationären Zustand. Abhängig von der Öleigenschaft 86 und der Boosterdrehzahl 88 wird über ein Kennfeld 104 eine maximal zulässige Leistungsdifferenz bestimmt. Die Leistungsdifferenz wird, wie bereits erläutert, aufgrund des Leistungswertes 68 (POW_BOOST_EL) des Motormodells 60 und des Leistungswertes (POW_BOOST) 52 des Verdichtermodells 38 bestimmt. Die Abweichung (POW_DIF) 106 zwischen den beiden Leistungswerten wird mit der maximalen Leistungsabweichung aus dem Kennfeld 104 in einem Verfahrensschritt 108 verglichen. Liegt das Freigabeflag für die stationäre Diagnose 78 vor, so wird ein Fehlersignal 110 (LV_ERR_BOOST_STAT) generiert, wenn die Regelabweichung größer als die maximale zulässige Abweichung ist.

In Fig. 5 ist die Bestimmung eines Fehlersignals für den transienten Zustand dargestellt. Ausgehend von der Differenz der Leistung 106 wird diese unter Hinzunahme der Boosterdrehzahl 86 in eine Drehmomentdifferenz des Boosters 114 umgerechnet. Dividiert durch das Trägheitsmoment des Laufzeugs und des Elektromotors 116 (C_J_BOOST) wird hieraus ein Wert für die Beschleunigung des Boosters 118 berechnet, der in einen Drehzahlgradienten des Boosters 120 (N_BOOST_GRND_TQ) aufgrund des Drehmoments umgerechnet wird. Von diesem Drehzahlgradienten ausgehend wird eine Regeldifferenz für den Drehzahlgradienten mit Hilfe eines durch die Motorsteuerung bestimmten Drehzahlgradienten 94 ermittelt. Zur Bestimmung der maximalen Abweichung der Drehzahlgradienten voneinander wird abhängig von der Boosterdrehzahl 86 und der Drehmomentdifferenz des Boosters 114 über ein Kennfeld 124 ein Grenzwert bestimmt. Der Grenzwert wird abhängig von den Öleigenschaften 88, vorzugsweise von der Öltemperatur über ein Kennfeld 126 modifiziert. Das Produkt gibt die maximal zulässige Abweichung der Drehzahlgradienten 128 (N_BOOST_GRD_DIF_MAX) an. In einem Verfahrensschritt 130 werden die Abweichungen der Gradienten des Boosters 122 mit der maximal zulässigen Abweichung 128 verglichen. Ist die festgestellte Regelabweichung 122 größer als die maximal zulässige Abweichung 128 wird bei Vorliegen eines Freigabeflags für die Diagnose im transienten Zustand 80 ein Fehlersignal 132 für den Booster (LV_ERR_BOOST_TRA) erzeugt.

## Patentansprüche

1. Verfahren zur Erkennung von Fehlern an einem elektrisch angetriebenen Verdichter in einer Brennkraftmaschine, mit folgenden Verfahrensschritten:
- ein Wert für die erzeugte Leistung (52) des elektrisch angetriebenen Verdichters wird in einem Verdichtermodell (38) abhängig von Betriebsparametern (40 - 50) des Verdichters bestimmt,
- ein Wert für die vom elektrisch angetriebenen Verdichter aufgenommene elektrische Leistung (68) wird in einem Motormodell (60) für den elektrisch angetriebenen Motor des Verdichters abhängig von Parametern (62, 64) der elektrischen Versorgung bestimmt,
- eine Fehlererkennungseinheit (84) erzeugt ein Fehlersignal (LV_ERR_BOOST_MEC) für eine Motorsteuerung, wenn in einem stationären Betriebszustand die Differenz zwischen aufgenommener elektrischer Leistung und erzeugter Leistung einen ersten Grenzwert übersteigt.

2. Verfahren zur Erkennung von Fehlern an einem elektrisch angetriebenen Verdichter in einer Brennkraftmaschine, mit folgenden Verfahrensschritten:
- ein Wert für die erzeugte Leistung (52) des elektrisch angetriebenen Verdichters wird in einem Verdichtermodell (38) abhängig von Betriebsparametern (40 - 50) des Verdichters bestimmt,
- ein Wert für die vom elektrisch angetriebenen Verdichter aufgenommene elektrische Leistung (68) wird in einem Motormodell (60) für den elektrisch angetriebenen Motor des Verdichters abhängig von Parametern (62, 64) der elektrischen Versorgung bestimmt,
- eine Fehlererkennungseinheit (90) erzeugt ein Fehlersignal (LV_ERR_BOOST_MEC) für eine Motorsteuerung, wenn in einem transienten Betriebszustand die Differenz einer Drehbeschleunigung (94) an dem elektrisch angetriebenen Verdichter und einer modellierten Drehbeschleunigung (120) einen zweiten Grenzwert (128) übersteigt, wobei die modellierte Drehbeschleunigung aufgrund der Differenz von erzeugter Leistung (52) und aufgenommener elektrischer Leistung (66) bestimmt wird.

3. Verfahren zur Erkennung von Fehlern an einem elektrisch angetriebenen Verdichter in einer Brennkraftmaschine, mit folgenden Verfahrensschritten:
- ein Wert für die erzeugte Leistung (52) des elektrisch angetriebenen Verdichters wird in einem Verdichtermodell (38) abhängig von Betriebsparametern (40 - 50) des Verdichters bestimmt,
- ein Wert für die vom elektrisch angetriebenen Verdichter aufgenommene elektrische Leistung (68) wird in einem Motormodell (60) für den elektrisch angetriebenen Motor des Verdichters abhängig von Parametern (62, 64) der elektrischen Versorgung bestimmt,
- eine Fehlererkennungseinheit (70) erzeugt ein Fehlersignal (LV_ERR_BOOST_MEC) für eine Motorsteuerung, wenn die Differenz zwischen einer Drehzahl (52) des elektrisch angetriebenen Verdichters (N_BOOST), die abhängig von Betriebsparametern in dem Verdichtermodell bestimmt wird, und einer Drehzahl (66) des elektrisch angetriebenen Verdichters (N_BOOST_EL), die von dem Motormodell abhängig von der elektrischen Versorgung bestimmt wird, einen dritten Grenzwert (100) überschreitet.

4. Verfahren nach Anspruch 1 oder 2, **dadurch gekennzeichnet, dass** der erste Grenzwert für den stationären Betriebszustand oder der zweite Grenzwert für den instationären Betriebszustand abhängig von Öleigenschaften (88) und der Drehzahl (86) des elektrisch angetriebenen Verdichters bestimmt wird.

5. Verfahren nach Anspruch 3, **dadurch gekennzeichnet, dass** der dritte Grenzwert für den Drehzahlvergleich abhängig von der Ansauglufttemperatur (42) bestimmt wird.

6. Verfahren nach einem der Ansprüche 1 bis 5, **dadurch gekennzeichnet, dass** das Verdichtermodell (38) als Ausgangsgröße für den Verdichter die Leistung (52) des elektrisch angetriebenen Verdichters (POW_BOOST), die Drehzahl (54) des elektrisch angetriebenen Verdichters (N_BOOST), den Ladedruck (56) vor dem elektrisch angetriebenen Verdichter (PRS_BOOST_PU) und den Luftmassenstrom (58) (MAF_BOOST) durch den elektrisch angetriebenen Verdichter bestimmt.

7. Verfahren nach Anspruch 6, **dadurch gekennzeichnet, dass** an dem Verdichtermodell die folgenden Eingangsgrößen anliegen:
- Umgebungsdruck (40) (AMP),
- Ansauglufttemperatur (42) (TIA),
- Druckverlust am Ladeluftkühler (44) (PRS_LOSS_ICO),
- Druckverlust am Luftfilter (46) (PRS_LOSS_AIC),
- Luftmassenstrom durch den Luftfilter (48) (MAF_AIC) und
- Ladedruck an dem elektrisch angetriebenen Verdichter (52) (PRS_BOOST).

8. Verfahren nach einem der Ansprüche 1 bis 7, **dadurch gekennzeichnet, dass** das Motormodell (60) für den elektrisch angetriebenen Verdichter die Drehzahl (66) des Verdichters und aufgenommene elektrische Leistung (68) bestimmt.

9. Verfahren nach Anspruch 8, **dadurch gekennzeichnet, dass** das Motormodell Bordnetzspannung (64) und Tastverhältnis (62) der Motoransteuerung als Eingangsgröße besitzt.

10. Verfahren nach einem der Ansprüche 1 bis 9, **dadurch gekennzeichnet, dass** eine Zustandserkennung (76) den stationären und den transienten Betriebszustand des elektrisch angetriebenen Verdichters erkennt und für jeden der Zustände ein Freigabesignal (78, 80) erzeugt.

11. Verfahren nach Anspruch 10, **dadurch gekennzeichnet, dass** den Betriebszustand des elektrisch angetriebenen Verdichters abhängig von den folgenden Eingangsgrößen bestimmt wird:
- dem Ladedruck (56) vor dem elektrisch angetriebenen Verdichter (PRS_BOOST_UP),
- dem Luftmassenstrom (58) durch den elektrisch angetriebenen Verdichter (MAF_BOOST) und
- dem Ladedruck (50)des elektrisch angetriebenen Verdichters (PRS_BOOST).

## Claims

1. Method for detection of errors at an electrically-driven compressor in an internal combustion engine, with the following steps:
- a value for the output power (52) of the electrically-driven compressor is determined in a compressor model (38) as a function of operating parameters (40 - 50) of the compressor,
- a value for the electrical power consumed by the electrically-driven compressor (68) is determined in a motor model (60) for the electrically-driven motor of the compressor as a function of parameters (62, 64) of the electrical power supply,
- an error detection unit (84) creates an error signal (LV_ERR_BOOST_MEC) for a motor controller, if in a stationary operating state the difference between consumed electrical power and output power exceeds a first limit value.

2. Method for detection of errors at an electrically-driven compressor in an internal combustion engine, with the following steps:
- a value for the output power (52) of the electrically-driven compressor is determined in a compressor model (38) as a function of operating parameters (40 - 50) of the compressor,
- a value for the electrical power consumed by the electrically-driven compressor (68) is determined in a motor model (60) for the electrically-driven motor of the compressor as a function of parameters (62, 64) of the electrical power supply,
- an error detection unit (90) creates an error signal (LV_ERR_BOOST_MEC) for a motor control, if in a transient operating state the difference between an angular acceleration (94) at the electrically-driven compressor and a modelled angular acceleration (120) exceed a second limit value (128), with the modelled angular speed being determined on the basis of the difference between input power (52) and electrical power consumed (66).

3. Method for detection of errors at an electrically-driven compressor in an internal combustion engine, with the following steps:
- a value for the output power (52) of the electrically-driven compressor is determined in a compressor model (38) as a function of operating parameters (40 - 50) of the compressor,
- a value for the electrical power consumed by the electrically-driven compressor (68) is determined in a motor model (60) for the electrically-driven motor of the compressor as a function of parameters (62, 64) of the electrical power supply,
- an error detection unit (70) creates an error signal (LV_ERR_BOOST_MEC) for a motor control if the difference between a speed (52) of the electrically-driven compressor (N_BOOST), which is determined as a function of operating parameters in the compressor model, and a speed (66) of the electrically-driven compressor (N_BOOST_EL), which is determined by the motor model as a function of the electrical power supply exceeds a third limit value (100).

4. Method in accordance with claim 1 or 2, **characterized in that** the first limit value for the stationary operating state or the second limit value for the non-stationary operating state are determined as a function of oil characteristics (88) and the speed (86) of the electrically-driven compressor.

5. Method according to claim 3, **characterized in that** the third limit value for the speed comparison is determined as a function of the induction air temperature (42).

6. Method in accordance with one of the claims 1 to 5, **characterized in that** the compressor model (38) establishes as output variables for the compressor the power (52) of the electrically-driven compressor (POW_BOOST), the speed (54) of the electrically-driven compressor (N_BOOST), the charge pressure (56) upstream from the electrically-driven compressor (PRS_BOOST_PU) and the mass air flow (58) (MAF_BOOST) through the electrically-driven compressor.

7. Method according to claim 6, **characterized in that** the following input variables are present at the compressor model
- Ambient pressure (40) (AMP),
- Induction air temperature (42) (TIA),
- Pressure loss at the charge air cooler (44) (PRS_LOSS_ICO),
- Pressure loss at the air filter (46) (PRS_LOSS_AIC),
- Mass air flow through the air filter (48) (MAF_AIC) and
- Charge pressure at the electrically-driven compressor (52) (PRS_BOOST).

8. Method in accordance with one of the claims 1 to 7, **characterized in that** the motor model (60) for the electrically-driven compressor determines the speed (66) of the compressor and electrical power consumed (68).

9. Method according to claim 8, **characterized in that** the motor model has the vehicle power network (64) and duty factor (62) of the motor control as input variables.

10. Method in accordance with one of the claims 1 to 9, **characterized in that** the state detection (76) detects the stationary and the transient operating state of the electrically-driven compressor and creates an enable signal for each of the states (78, 80).

11. Method according to claim 10, **characterized in that** the operating state of the electrically-driven compressor is determined as a function of the following input variables:
- The charge pressure (56) upstream from the electrically-driven compressor (PRS_BOOST_UP),
- The mass air flow (58) through the electrically-driven compressor (MAF_BOOST) and
- The charge pressure (50)of the electrically-driven compressor (PRS_BOOST).

## Revendications

1. Procédé pour la détection de défauts sur un compresseur à entraînement électrique dans un moteur à combustion interne, qui comprend les étapes de procédé suivantes :
- une valeur pour la puissance produite (52) du compresseur à entraînement électrique est déterminée dans un modèle de compresseur (38) en fonction de paramètres de fonctionnement (40 - 50) du compresseur,
- une valeur pour la puissance électrique (68) absorbée par le compresseur à entraînement électrique est déterminée dans un modèle de moteur (60) pour le moteur entraîné électriquement du compresseur en fonction de paramètres (62, 64) de l'alimentation électrique,
- une unité de détection de défauts (84) produit un signal de défaut (LV_ERR_BOOST_MEC) pour une commande de moteur lorsque, dans un état de fonctionnement stationnaire, la différence entre la puissance électrique absorbée et la puissance produite devient supérieure à une première valeur limite.

2. Procédé pour la détection de défauts sur un compresseur à entraînement électrique dans un moteur à combustion interne, qui comprend les étapes de procédé suivantes :
- une valeur pour la puissance produite (52) du compresseur à entraînement électrique est déterminée dans un modèle de compresseur (38) en fonction de paramètres de fonctionnement (40 - 50) du compresseur,
- une valeur pour la puissance électrique (68) absorbée par le compresseur à entraînement électrique est déterminée dans un modèle de moteur (60) pour le moteur entraîné électriquement du compresseur en fonction de paramètres (62, 64) de l'alimentation électrique,
- une unité de détection de défauts (90) produit un signal de défaut (LV_ERR_BOOST_MEC) pour une commande de moteur lorsque, dans un état de fonctionnement transitoire, la différence entre la puissance entre une accélération de rotation (94) au niveau du compresseur à entraînement électrique et une accélération de rotation modélisée (120) devient supérieure à une deuxième valeur limite (128), l'accélération de rotation modélisée étant déterminée sur la base de la différence entre la puissance produite (52) et la puissance électrique absorbée (66).

3. Procédé pour la détection de défauts sur un compresseur à entraînement électrique dans un moteur à combustion interne, qui comprend les étapes de procédé suivantes :
- une valeur pour la puissance produite (52) du compresseur à entraînement électrique est déterminée dans un modèle de compresseur (38) en fonction de paramètres de fonctionnement (40 - 50) du compresseur,
- une valeur pour la puissance électrique (68) absorbée par le compresseur à entraînement électrique est déterminée dans un modèle de moteur (60) pour le moteur entraîné électriquement du compresseur en fonction de paramètres (62, 64) de l'alimentation électrique,
- une unité de détection de défauts (70) produit un signal de défaut (LV_ERR_BOOST_MEC) pour une commande de moteur lorsque la différence entre une vitesse de rotation (52) du compresseur à entraînement électrique (N_BOOST) qui est déterminée en fonction de paramètres de fonctionnement dans le modèle de compresseur et une vitesse de rotation (66) du compresseur à entraînement électrique (N_BOOST_EL) qui est déterminée par le modèle de moteur en fonction de l'alimentation électrique devient supérieure à une troisième valeur limite (100).

4. Procédé selon la revendication 1 ou 2, **caractérisé en ce que** la première valeur limite pour l'état de fonctionnement stationnaire ou la deuxième valeur limite pour l'état de fonctionnement non stationnaire est déterminée est fonction de propriétés de l'huile (88) et de la vitesse de rotation (86) du compresseur à entraînement électrique.

5. Procédé selon la revendication 3, **caractérisé en ce que** la troisième valeur limite pour la comparaison des vitesses de rotation est déterminée en fonction de la température de l'air d'aspiration (42).

6. Procédé selon une des revendications 1 à 5, **caractérisé en ce que** le modèle de compresseur (38) détermine, comme grandeurs de sortie pour le compresseur la puissance (52) du compresseur à entraînement électrique (POW_BOOST), la vitesse de rotation (54) du compresseur à entraînement électrique (N_BOOST), la pression de suralimentation (56) en amont du compresseur à entraînement électrique (PRS_BOOST-PU) et le débit massique d'air (58) (MAF_BOOST) traversant le compresseur à entraînement électrique.

7. Procédé selon la revendication 6, **caractérisé en ce que** les grandeurs d'entrée suivantes sont présentes sur le modèle de compresseur :
- la pression ambiante (40) (AMP),
- la température de l'air d'aspiration (42) (TIA),
- la perte de charge au niveau du refroidisseur d'air de suralimentation (44) (PRS_LOSS_ICO),
- la perte de charge sur le filtre à air (46) (PRS_LOSS_AIC)
- le débit massique d'air à travers le filtre à air (48) (MAF_AIC) et
- la pression de suralimentation sur le compresseur à entraînement électrique (52) (PRS BOOST).

8. Procédé selon une des revendications 1 à 7, **caractérisé en ce que** le modèle de moteur (60) pour le compresseur à entraînement électrique détermine la vitesse de rotation (66) du compresseur et la puissance électrique absorbée (68).

9. Procédé selon la revendication 8, **caractérisé en ce que** le modèle de moteur possède comme grandeurs d'entrée la tension du réseau de bord (64) et le taux d'impulsions (62) de la commande du moteur.

10. Procédé selon une des revendications 1 à 9, **caractérisé en ce qu'**une détection d'état (76) détecte l'état de fonctionnement stationnaire et l'état de fonctionnement transitoire du compresseur à entraînement électrique et produit un signal de validation (78, 80) pour chacun des états.

11. Procédé selon la revendication 10, **caractérisé en ce que** l'état de fonctionnement du compresseur à entraînement électrique est déterminé en fonction des grandeurs d'entrée suivantes :
- la pression de suralimentation (56) en amont du compresseur à entraînement électrique (PRS_BOOST_UP),
- le débit massique d'air (58) à travers le compresseur à entraînement électrique (MAF_BOOST) et
- la pression de suralimentation (50) du compresseur à entraînement électrique (PRS_BOOST).
